# EUROPEAN PATENT APPLICATION

(11) **EP 1 920 813 A1**
(43) Date of publication of application: **14.05.2008**
(21) Application number: 07020797.2
(22) Date of filing: 24.10.2007
(51) Int. Cl.: B01D 25/38

(54) **Device for scraping the filter bed from a filter press**

(30) Priority: 27.10.2006 BE 200600528
(71) Applicant: Welders Filtration Technology, 9300 Aalst (BE)
(72) Inventor: Timmerman, Rik Josef Camiel Lea, 9052 Gent -Zwijnaarde (BE)
(74) Representative: Donné, Eddy

(57) **Abstract**

Device for scraping off filter beds from a filter press (1) of the type that is composed of a series of vertical plates (3) that are pressed together and that are suspended in a frame (2), whereby a covering filtering cloth (15) is provided against at least one side of every plate (3) and whereby adjoining plates (3) confine a space (11) in between which filtered medium is collected as a cake (21) that sticks to the filtering cloth (15), and that are separated from one another before being cleaned so as to be able to remove the cake (21), characterised in that the device (22) consists of one or several scrapers (37) that are slantingly directed in relation to the plates (3) and of a drive for moving every scraper (37) in strips over the surface of the filtering cloth (15) resting against the plate.

## Description

The present invention concerns a device for scraping off filter beds from a filter press.

In particular, the invention is designed for scraping off the filter beds from a filter press of the type that is composed of a series of vertical plates, pressed together by means of a press cylinder, that are suspended in a frame, whereby a covering filtering cloth is provided against at least one side of every plate, and whereby adjoining plates confine a space in between which filtered slurry is collected as a cake that adheres to the filtering cloth.

In order to scrape off the filter beds from the filter press, the press cylinder that holds the plates together is withdrawn, such that the plates can be separated from one another so as to be able to remove the cake from the filtering cloth of the plates.

Since the entire cake will not always fall from between the plates as such due to the gravitational force, a device can be used to mechanically remove the cake.

Such devices are already known whereby the plates and/or the cloths are shaken or whereby the filtering cloth is removed from the plates over a certain distance.

These solutions are half-hearted, indirect means and they sometimes remove the cake only partly, such that an operator should always be present to control the good working order and to intervene whenever necessary.

From EP 0,860,188 is known a device whereby the filtering cloth is also partly removed from the plates, and whereby the cake is scraped from the cloth by means of a scraper, whereas in order to retain the cloth during this operation, a counter pressure element is applied that is moved synchronously with the scraper on the back side of the cloth to be cleaned.

A disadvantage of this device is that it requires plates with a special design, having a passage for the supply of the medium to be filtered at the bottom, as opposed to the plates that are traditionally applied in conventional filter presses of the above-mentioned type with a central and other (e.g. angular) sludge supply.

Indeed, as the filtering cloth extends through the above-mentioned supply passage in the plate, it would not be possible with a device as that of EP 0,860,188 to scrape off filter presses with conventional plates and a central supply, since the filtering cloth could only be pulled loose up to the central passage and the plate thus could not be scraped off for more than half of it.

Consequently, the existing filter presses with conventional plates should be entirely rebuilt and all the plates should be replaced so as to make it possible to apply a device according to EP 0,860,188, what makes this solution very expensive of course.

Even with the plates of a special design, as described in EP 0,860,188, such a device according to EP 0,860,188 cannot entirely scrape off the plates to the bottom, which of course is disadvantageous to the efficiency and guaranteed automatic operation of such a device.

An additional disadvantage is that, because of the position of the supply, which is situated at the bottom as this is inherent to the system, the rooms in between the plates can sometimes only be partly filled, which is also disadvantageous to the output of the filter press.

Moreover, a device according to EP 0,860,188 requires a complex spring system, and the cloths should be attached in a special way.

From EP 0,237,869 is also already known a device whereby a single scraper is moved over the surface of a plate of a filter press by means of an articulated robot arm in order to remove the filter bed that is present, whereby the movement of the robot arm is controlled and monitored as a function of screens of one or two recording units that detect among others the presence of filter bed residues or even of damages to the filtering cloth.

The recorded images of the filter plate with possible cake residues are compared to the image of a reference plate with a pure filtering cloth.

The disadvantage of such a known device is that, in practice, it cannot be applied to the aimed unmanned application, since the control depends on the recorded images that may be influenced, for example, by dirt, rain or the like on the lens, in which case the control may go completely wrong, as a result of which the scraping result will be bad or the device may even be damaged.

That is probably also the reason why this rather theoretical model is not applied in practice.

Moreover, such a device would be rather expensive and fragile to apply and it would take much time to remove the filter beds.

The present invention aims to remedy one or several of the above-mentioned and other disadvantages.

To this end, the invention concerns a device for scraping off the cakes from a filter press of the above-mentioned type, which consists of one or several scrapers that are directed downward in a slanting manner, and of a drive for moving and pressing every scraper in strips over the surface of the filtering cloth resting against the plate.

An advantage of such a device is that the filtering cloth can rest against the plate to be cleaned during the scraping and hence does not need to be pulled off this plate as with other known systems.

Another advantage is that the device can be made simpler, more robust and more reliable, since no additional appliances are required to pull the filtering cloth from the plate, nor any expensive and fragile recording units to control the device.

Another advantage is that the device can be applied to any type of plates and thus also in particular to the conventional filter plates having a central passage for the supply of the medium to be cleaned, such that this device can also be applied to the known filter presses without any considerable rebuilding.

Another advantage is that the entire surface of the plate can be scraped off, such that one can state with certainty that the cakes can be scraped off without any human intervention and that, consequently, the device can be made as a fully automatic robot.

Another advantage is that a plate can be scraped off fast and efficiently.

In order to better explain the characteristics of the invention, the following preferred embodiment of a device according to the invention for scraping off cakes from a filter press are given as an example only without being limitative in any way, with reference to the accompanying drawings, in which:
figure 1 schematically represents a filter press in perspective when open, which is provided with a cleaning device according to the invention;
figure 2 represents the device according to the invention to a larger scale, which is represented by F2 in figure 1, but from another point of view;
figure 3 is a side view according to arrow F3 in figure 1;
figure 4 represents the part indicated by F4 in figure 3 to a larger scale;
figures 5 and 5' are partial sections, according to line V-V and V'-V' in figure 1 respectively;

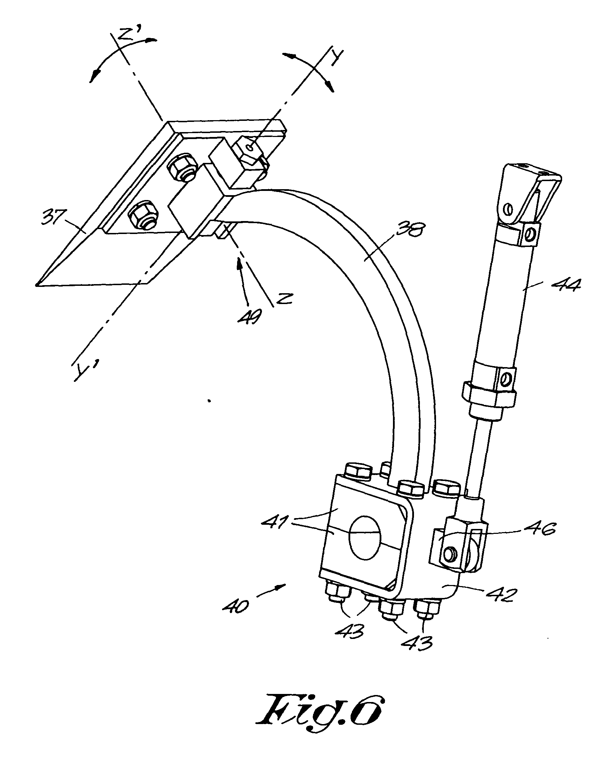

figure 6 represents the part indicated by F6 in figure 4 to a larger scale and seen in perspective;

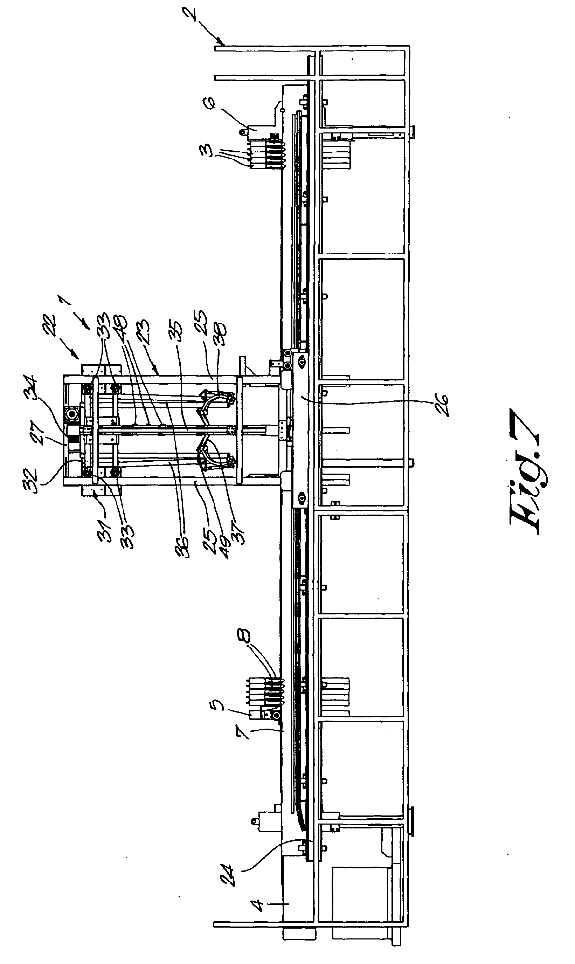

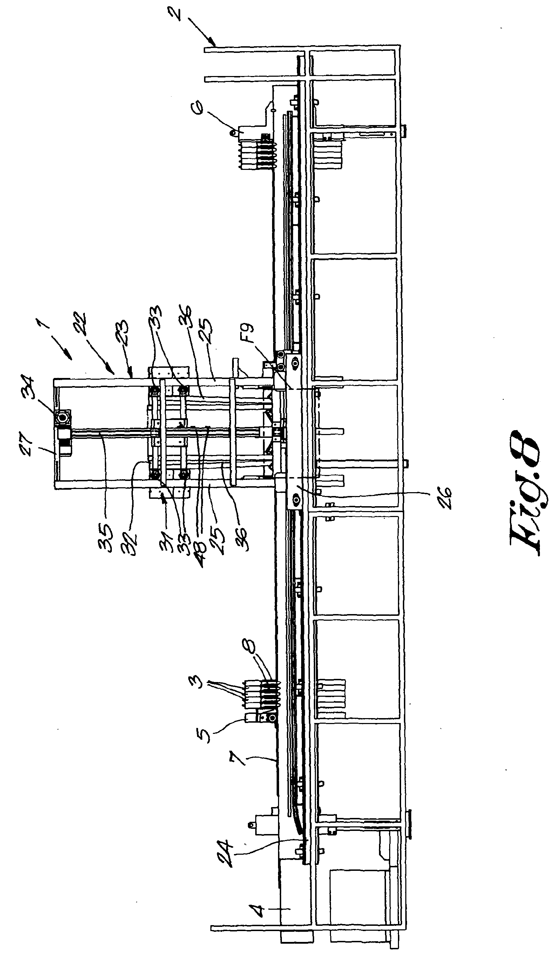

figures 7 and 8 each represent a view as in figure 3, but each time for another position;

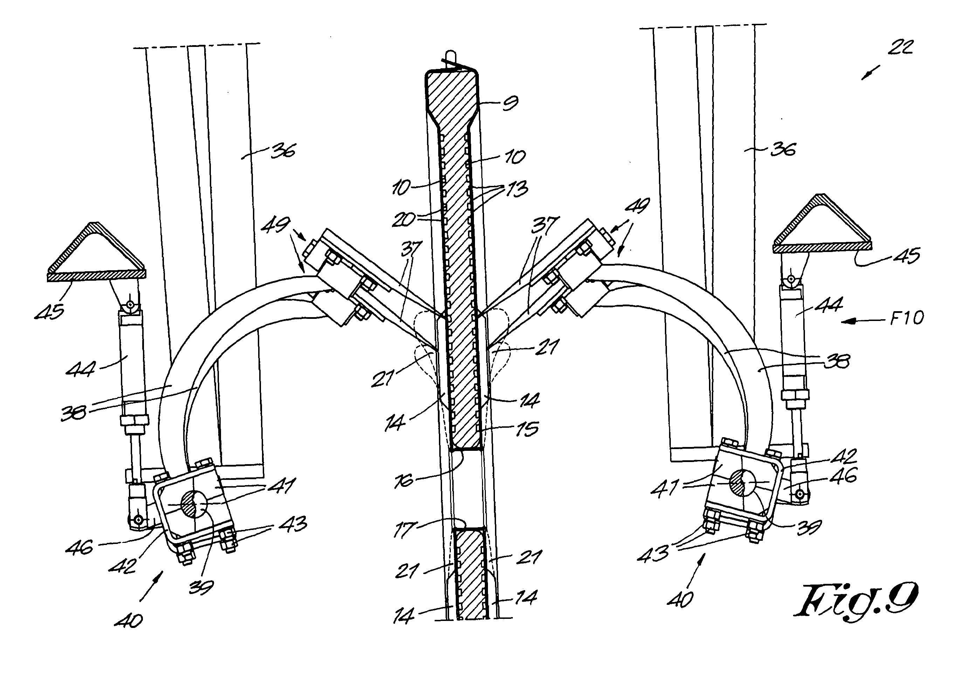

figure 9 represents the part indicated by F9 in figure 8, but according to a longitudinal section of the filter press;

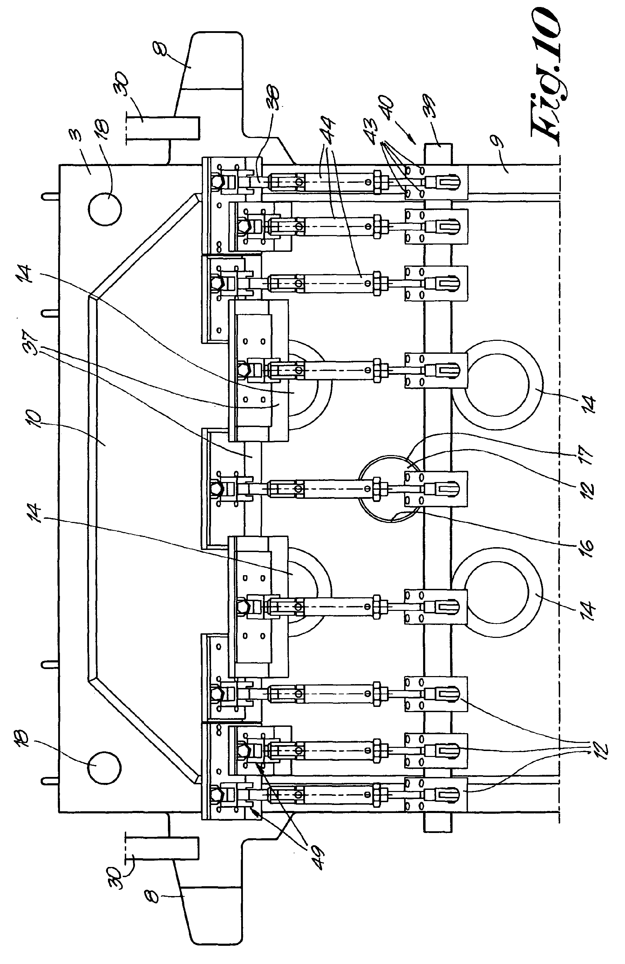

figure 10 represents a view according to arrow F10 in figure 9.

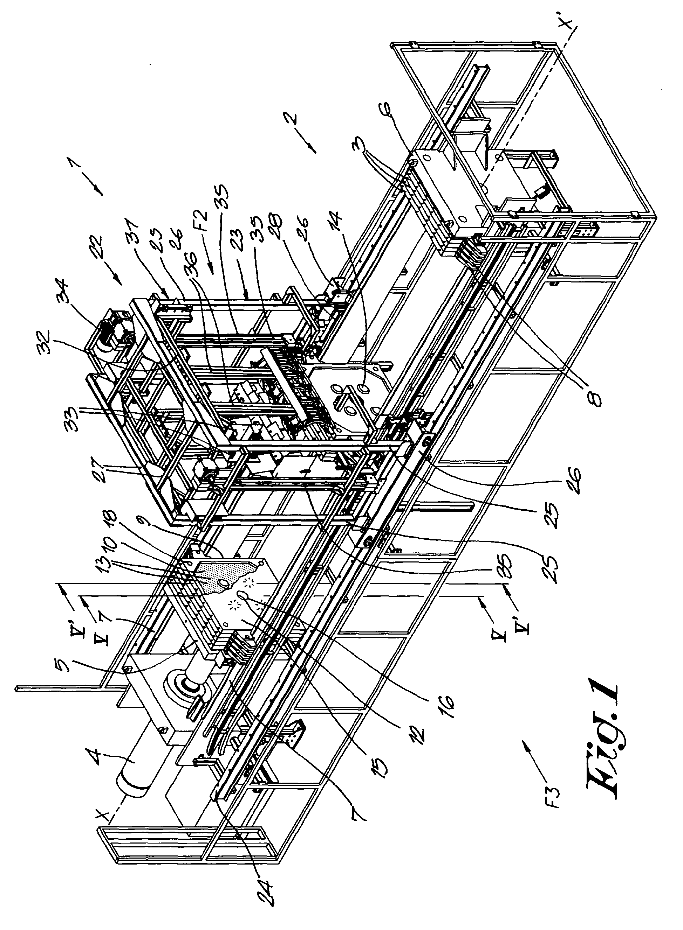

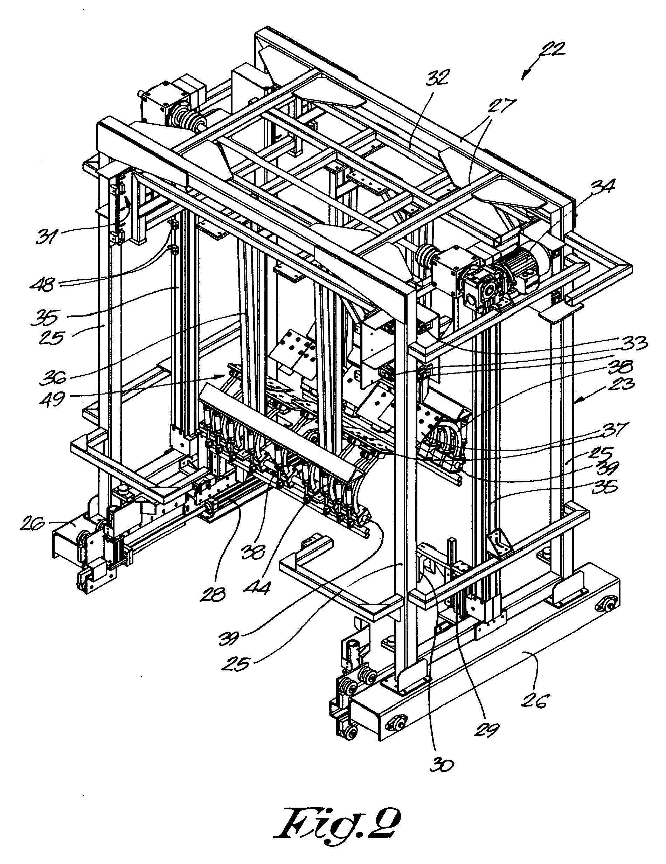

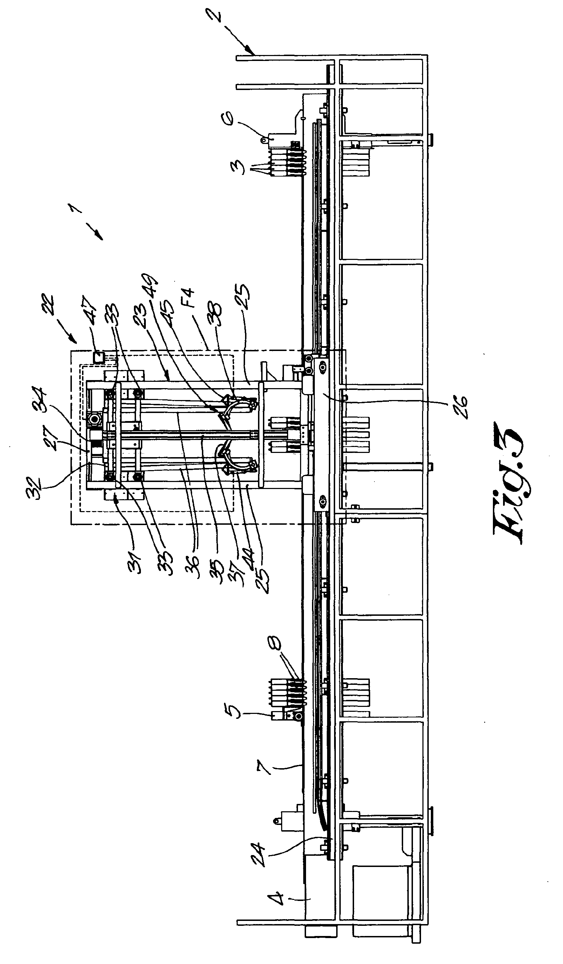

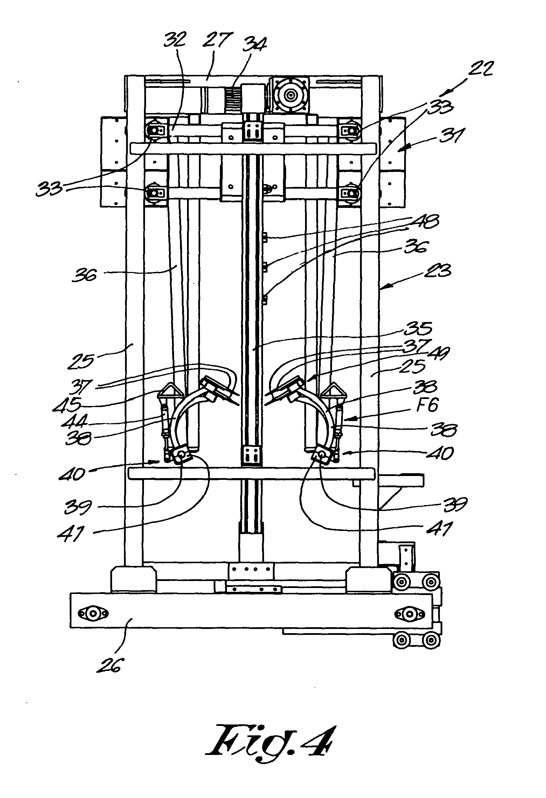

The filter press 1 represented in figures 1 to 4 mainly consists, as is known, of a frame 2 in which a series of vertical standing plates 3 are freely suspended, whereby these plates 3 can be pressed together between two heads 5 and 6 by means of a hydraulic press cylinder 64.

To this end, the plates 3 are situated between two parallel longitudinal girders 7 and they are provided with suspension elements 8 with which the plates 3 rest on the longitudinal girders 7 and can be shifted in the longitudinal direction X-X' of the filter press 1.

The plates 3 are provided with a thickened edge 9 with which the plates 3 rest against one another and which define a deepened part 10 on either side of the plate 3, such that a space 11 is confined between adjoining plates 3 in which a filtered solid/liquid mixture can be collected.

The plates 3 are each provided with a central passage 12 in this case for the supply of the medium to be filtered, which is distributed by means of a pump (not represented) between the plates 3.

Every plate 3 is provided with projections 13 in the deepened part 10 on either side of the plate 3, which are distributed at mutual distances according to a regular pattern over the surface of the deepened parts 10 of plates 3.

Moreover, every plate 3 is traditionally provided, on either side of the deepened parts 10, with a number of reinforcements 14 in the form of thickenings protruding from the projection structure and distributed at a distance from the passage 12 around this passage 12.

On either side of every plate 3 is provided a filtering cloth 15 which entirely covers the plate and which is fixed to the plate 3 concerned at its perimeter in an appropriate and known manner, or to the filtering cloth 15 on the other side of the plate 3 concerned.

Both filtering cloths 15 are provided with an opening 16 with which both filtering cloths 15 are connected to each other by means of a sleeve 17 protruding through the passage 12 in the plate 3 and which is for example stitched or fixed with its far ends along the edges of the above-mentioned openings 16 in the filtering cloths 15.

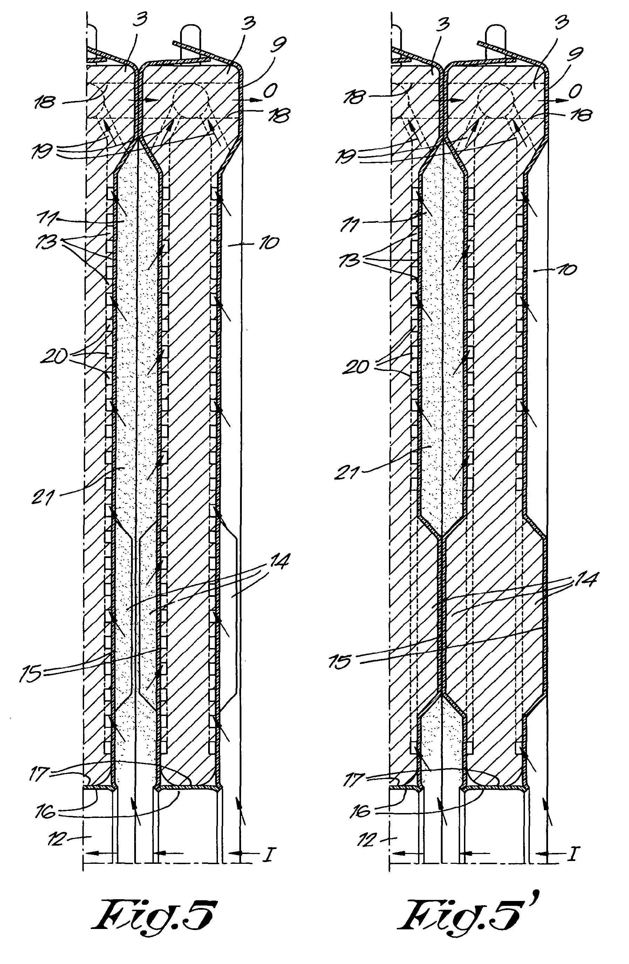

Every plate 3 is provided with a number of discharge channels for the filtered medium in the form of a passage 18 in every corner of the above-mentioned thickened edge 9 of the plate 3, as is represented by means of a dashed line in figure 5, whereby every passage 18 is connected to the deepened parts 10 on either side of the plate 3 via bore holes 19 in the above-mentioned edge 9.

As is schematically represented by means of the arrows I in figure 5, the medium to be filtered is pumped between the plates 3.

The filtered liquid medium is pressed through the filtering cloth and discharged via the channels 20 between the projections 13 and the discharge channels 19 and 18 in the above-mentioned edge 9 of every plate 3, as represented by means of the arrows O in figure 5.

The filtered slurry is collected as a cake 21 which sticks to the filtering cloth 15.

The filter press 1 is equipped with a device 22 according to the invention for scraping off the cake of the filter press 1, in particular for removing the cake 21 from every plate 3 of the filter press 1.

This device 22 mainly consists of a carriage 23 in the form of a portal, which can be moved over the longitudinal girders 24 of the frame 2 by means of a drive, not represented here, over the plates 3.

The carriage 23 is in this case formed of four struts 25, built in pairs on a wheel base 26 and that are mutually connected by means of girders 27.

Either or not coupled to the above-mentioned carriage 23 are provided means, which are not further described here, which make it possible to remove the plates 3 from one another, after the press cylinder 4 has been detached, and to go and fetch them one by one so as to set the plate to be cleaned free in order to scrape it off, and as an option also means 28 which make it possible, when a plate 3 to be cleaned is detached, to check the remaining plates 3 that have not been cleaned yet, so as to prevent these remaining plates 3, in case there is some sticky filter bed between the plates 3, from being dragged along with the plate 3 to be cleaned.

Means 29 are also provided on the carriage 23 which make it possible to retain the plate 3 to be cleaned on the spot during the scraping, for example in the shape of a fork 30 that can be moved and that can get hold of the plate 3 to be cleaned and thus retain it, for example at the suspension elements 8.

The carriage 23 is also provided with a rail 31 in the shape of a horizontal, rectangular pipe construction 32 which is adjustable in height, provided with wheels 33 on all four angles which are guided in the vertical direction by the above-mentioned struts 25 of the carriage 23, and which is provided with a vertical drive, for example in the shape of a motor 34 and a drive 35.

Under the rail 31, crosswise to the longitudinal direction X-X' of the filter press 1, are fixed vertical supports 36, situated at a distance from one another which is larger than the thickness of the plates 3, and which are positioned such that, when the carriage 23 is positioned at the plate 3 to be scraped off, these supports 36 can be moved on either side of the plate 3 via the rail 31.

Further, every support 36 is provided with a series of for example nine scrapers 37, for example made of plastic, which are distributed over the width of the plate 3 to be cleaned and which preferably partly overlap widthwise.

Every scraper 37 is fixed to the top end of an upward directed arm 38, which is hinge-mounted with its foot to a separate or common horizontal shaft 39, running parallel to the plate 3 to be cleaned, and which is fixed to the bottom end of the above-mentioned supports 36 of the rail 31.

The above-mentioned arms 38 are preferably bent, for example in the shape of the segment of a circle which is directed with its hollow side to the plate 3 to be cleaned, whereby the scrapers are preferably directed with their tips pointed slantingly in the direction of movement of the scrapers, in other words whereby they are directed slantingly downward in case the scraping movement is directed downward.

The arms 38 of the scrapers 37 are hinge-mounted to the above-mentioned shaft 39 of the rail 31 by means of plastic bearings 40 that are composed of two half bearing parts 41 provided in a U-shaped bracket 42 at the foot of the arm 38 around the shaft 39, and that are connected to one another in a detachable manner by means of bolts 43.

The depth of the tip of every scraper 37 in relation to the plate 3 to be cleaned, in other words the horizontal distance to the plate 3, is controlled by means of a pneumatic cylinder 44 provided between a reinforcement strip 45 on the supports 36 of the rail 31 and a transverse protrusion 46 on the U-shaped bracket 42 of the arm 38, and which is fed by a pneumatic control circuit, not represented in the figures, to make the arm 38 of the scraper 37 concerned rotate round the above-mentioned shaft 39 on the rail 31 and to push the scraper against the plate 3 with an appropriate force.

The device 22 is preferably fully automatically controlled to clean all the plates 3 of the filter press 1.

To this end, a control unit 47 may be provided which provides for the control of the drive of the scrapers 37, i.e. the vertical drive 34-35 of the rail 31 and the depth drive 38-44 with which the distance of the tip of the scraper 37 in relation to the plate 3 to be cleaned is controlled by means of the movement of the arms 38; of the drive of the carriage 23; of the drive of the means 28 which make it possible to remove the plates from one another; of the drive of the fork 30 and of the drive of the press cylinder 4 which presses the plates 3 against one another.

This control unit 47 is preferably pre-programmed or preset such that the scrapers 37 can be vertically moved over the entire height of the plate 3 to be cleaned, and such that during this movement, the depth drive 38-44 is controlled such that the tip of every scraper 37 follows the relief of the plate 3 to be cleaned or of the filtering cloth 15 against the plate 3 and continuously makes contact with it.

It is clear that this control unit 47 can be made as a separate unit or as a unit that works in combination with another unit, such as for example with the general control unit of the filter press 1 that is usually present as a unit which has been integrated in this general control unit.

The working of the device 1 is very simple and as follows.

When the cakes of the plates of the filter press 1 must be scraped off, the hydraulic press cylinder 4 is withdrawn first, as a result of which the plates 3 to be cleaned are released and can freely shift in the longitudinal direction X-X' of the filter press 1.

Next, the plates 3 are released one after the other so as to scrape off the cakes by controlling the carriage 23 and the means 28 which make it possible to remove the plates from one another.

Thus, the plates can be scraped off one after the other by each time moving the rail 31 which is situated at the plate 3 to be cleaned at that time, and by simultaneously making the scrapers 37 follow the surface of the filtering cloth 15 with their tips by means of the depth drive 38-44, by controlling the cylinders 44 of the depth drive as a function of the vertical position of the scrapers 37, whereby the scrapers 37 scrape off the filter bed from the filter cloth 15 with a certain pressure, such that even the most tenacious layer on the filter cloth 15 itself can be efficiently removed.

The vertical position of the scrapers 37 is detected for example by means of a number of detectors 48 erected on the trajectory of the rail 31 so as to detect the positions of the scrapers 37 there where the relief of the plates 3 changes, such as for example at the edges 9 and at the reinforcements 14 of the plates 3, such that the control unit 47 can take this into account so as to move the scrapers 37 closer to or further away from the plate 3 should this be necessary.

Thus, the filter bed 21 of the entire surface of the filtering cloth 15 is scraped off, possibly in overlapping strips, and the scraped-off matter is collected under the filter press to be discharged or to be further processed.

Partly thanks to the special shape of the depth drive 38-44 and thanks to the use of a pneumatic cylinder 44, the scrapers 37 are prevented from accidentally getting caught behind an edge 9 or a reinforcement 14 of the plates 3 as they move, not even without any active control of the adjustment in height at the irregularities of the plate 3 and despite the fact that the scrapers 37 are directed with their tips in the direction of the scraping movement for an efficient scraping result.

As soon as all the plates 3 have been scraped off, the press cylinder 4 can be closed again so as to activate the filter press 1 again for filtering a medium.

Naturally, instead of providing a series of overlapping scrapers 37 on each side of the plate, it is also possible to apply a single scraper 37 that cleans every plate by means of successive scraping movements, one side after the other.

Although, in the given example, the scrapers move in parallel vertical paths in the height, it is not excluded to make the scrapers move in horizontal or in diagonal paths or according to any other pattern whatsoever for scraping off the entire surface of the plates.

It is clear that also other drives are conceivable to control the depth of the scrapers 37 in relation to the surface of the plates 3, for example by means of a cylinder that can axially move in the extension of every scraper.

It is also clear that the programming of the control unit 4 7 and the selection of the number of detectors 48 and their position make it possible to apply the invention to any type of plates 3 whatsoever, such that a device 22 according to the invention can be built on any existing filter press 1, i.e. also on a filter press with plates having an off-centre supply passage 3 such as is for example the case in EP 0,860,188 described in the introduction or in the case of plates in which the slurry is supplied via passages in one or several of the angles or in the case of plates that are provided with a flexible or inflatable membrane under the filtering cloth.

The number and the shape of the scrapers can be adjusted to the specific shape of the plates in order to obtain the best result.

The scrapers 37 can also be provided such that they can be adjusted in one or several directions on their arms 38, for example by means of a head 49 that can be tilted and locked around one or several axes Y-Y' and Z-Z', and/or the fact that the position of the scraper 37 on the head 49 is adjustable, for example in order to be able to adjust the position of the scraper 37 to a specific shape of the plate 3 or to be able to set off the wear of the scraper 37.

The carriage 23 must not necessarily be movable over the plates, but depending on the type of filter press it can also be moved under the plates or along the side of the plates.

It is not excluded for the scrapers to be erected in a fixed position in relation to the filter press 1, whereby the plates 3 are then released one after the other, for example by means that are not further described here, and are taken to the scrapers so as to be cleaned.

The present invention is by no means restricted to the embodiment described as an example and represented in the accompanying drawings; on the contrary, such a device according to the invention for scraping off the cakes of a filter press can be made in all sorts of shapes and dimensions while still remaining within the scope of the invention.

## Claims

1. Device for scraping off filter beds from a filter press (1) of the type that is composed of a series of vertical plates (3) that are pressed together and that are suspended in a frame (2), whereby a covering filtering cloth (15) is provided against at least one side of every plate (3) and whereby adjoining plates (3) confine a space (11) in between which filtered medium is collected as a cake (21) that sticks to the filtering cloth (15), and that are separated from one another before being cleaned so as to be able to remove the cake (21), **characterised in that** the device (22) consists of one or several scrapers (37) that are slantingly directed in relation to the plates (3) and of a drive for moving every scraper (37) in strips over the surface of the filtering cloth (15) resting against the plate.

2. Device according to claim 1, **characterised in that** every scraper (37) is pressed against the filtering cloth (15).

3. Device according to claim 1 or 2, **characterised in that** the above-mentioned drive consist of a drive (34-35) for a rail (31) on the one hand with which the scrapers (37) can be moved over the entire surface of the plate (3) to be cleaned, and of a depth drive (38-44) provided with a control (47) with which the distance of the scraper (37) in relation to the plate (3) to be cleaned is controlled as a function of the position of the scraper (37) so as to make the scraper (37) follow the relief of the plate (3).

4. Device according to any one of the preceding claims, **characterised in that** the control unit (47) makes use of one or several detectors (48) to detect the position of the scraper or scrapers (37).

5. Device according to any one of the preceding claims, **characterised in that** it consists of a series of scrapers (37), distributed over the width of the plate (3) to be cleaned.

6. Device according to claim 5, **characterised in that** the scrapers (37) partly overlap widthwise, such that the scraped-off strips overlap each other.

7. Device according to claim 3 to 6, **characterised in that**, for the depth drive, every scraper (37) is fixed to the top end of an upward directed arm (38), which is hinge-mounted with its foot to a shaft (39) running parallel to the plate (3) to be cleaned, and which is fixed at a distance of the plate to be cleaned on the above-mentioned rail (31).

8. Device according to claim 7, **characterised in that** the above-mentioned arm (38) is a bent arm, whose hollow side is directed to the plate (3) to be cleaned.

9. Device according to claim 7 or 8, **characterised in that** the above-mentioned arm (38) is controlled by a pneumatic cylinder (44), provided between the rail (31) and the arm (38), and which is fed by a pneumatic control circuit that is connected to the above-mentioned control unit (47).

10. Device according to any one of claims 7 to 9, **characterised in that** the above-mentioned arm (38) is hinge-mounted to the above-mentioned shaft (39) of the rail (31) by means of a plastic bearing (40) with two half bearing parts (41) that are provided round the shaft (39) and that are connected to one another in a detachable manner.

11. Device according to any one of the preceding claims 7 to 10, **characterised in that** the above-mentioned shaft (39) is common to at least a part of all the scrapers (37).

12. Device according to any one of the preceding claims, **characterised in that** it is provided with one or several scrapers (37) on each side of the plate (3) to be cleaned.

13. Device according to claim 12, **characterised in that** the scrapers (37) are provided on a common rail (3) on either side of the plate (3) to be cleaned.

14. Device according to claim 13, **characterised in that** the scrapers (37) are provided on supports (36) that are fixed to the rail (31) and that are situated at a distance from one another in the longitudinal direction (X-X') of the filter press (1), which distance is larger than the thickness of the plates (3).

15. Device according to any one of the preceding claims, **characterised in that** it is provided on a carriage (23) which is provided on the above-mentioned frame (2) of the filter press (1) in such a manner that it can be moved along the plates (3) by means of a drive.

16. Device according to claim 15, **characterised in that** the carriage (23) is provided with means (28) which make it possible to remove the plates (3) from one another, so as to set the plate (3) to be scraped free while it is being scraped off.

17. Device according to claim 16, **characterised in that** the carriage (23) is provided with means (29) which make it possible to hold the plate (3) to be scraped on the spot while it is being scraped off.

18. Device according to claim 17, **characterised in that** the above-mentioned means (29) for holding the plate are formed of a fork (30) that can be moved and that can mesh over the plate (3) to be scraped.

19. Device according to any one of the preceding claims, **characterised in that** it is fully automatically controlled for scraping off all the plates (3) of the filter press (1).

20. Device according to claim 19, **characterised in that** the above-mentioned control (47) to this end at least provides in the control of the drive of the scrapers (37); of the drive of the carriage (23); of the drive of the means (28) which make it possible to remove the plates (3) from one another; of the drive of the means (29) for holding the plate (3) to be scraped and of the drive of the press cylinder(s) (4) which press the plates (3) together.

21. Device according to claim 19, **characterised in that** it is suitable for scraping off plates (3) having a central or another passage for the supply of the medium to be filtered.

22. Device according to any one of the preceding claims, **characterised in that** the scraper is preferably directed with its tip pointed slantingly in the scraping direction.
